# EUROPEAN PATENT APPLICATION

(11) **EP 0 905 424 A2**
(43) Date of publication of application: **31.03.1999**
(21) Application number: 98202961.3
(22) Date of filing: 04.09.1998
(51) Int. Cl.: F16K 7/17, F16K 31/365

(54) **Pilot-operated valve for fluid shut-off**

(30) Priority: 24.09.1997 IT RE970063
(71) Applicant: Conductor Technology Ltd, London SW1Y 6HD (GB)
(72) Inventor: Orioli, Giacomo, 42024 Castelnovo di Sotto, Reggio Emilia (IT)
(74) Representative: Corradini, Corrado

(57) **Abstract**

The valve comprises, for fluid entry/exit, at least two conduits connected together via at least one communication port 21, 22, above which a chamber 25 is provided for fluid passage from one conduit 11, 12 to the other. There is also provided a free flexible membrane 36 which separates the upper region of said chamber 25 from the underlying region, is of such an area as to cover the communication port 21, 22, and is arranged to assume a first position in which it lies in contact with the entire edge of the port and a second position in which it is raised from the edge of the port. There are also provided pilot means 40 which, on command, feed into the upper region of the chamber 25 a pilot fluid having a pressure such as to urge the membrane 36 into the first position and to press against it with a thrust sufficient to prevent fluid passage through the port 21, 22, against the thrust of the fluid present in the conduits.

## Description

This invention relates to a pilot-operated valve for fluid shut-off.

The type of valve to which the invention relates comprises at least two conduits (the so-called "*ways*") communicating with the outside for fluid entry/exit, and connected together via at least one flow communication port. The entry fluid pressure is greater than the exit fluid pressure.

In known valves there is provided a movable valving element which is slidable along guide surfaces provided on the valve body, and on command either closes said communication port to shut off the flow, or leaves the flow passage free through the port. In some types of valve there is associated with the valving element a membrane which separates the region containing the guide surfaces for the valving element from the fluid passage region, especially if this latter is particularly abrasive/corrosive.

The invention can be applied either to liquids or to aeriforms of any type.

Any number of valve "*ways*" can be provided.

Likewise the fluid handled can have any pressure in theory, provided the pressure of the pilot fluid is correctly related to it.

An object of this invention is to provide a valve which is easier and more economical to manufacture than known valves, in particular with reference to the construction of the valving element and its related parts.

A further object is to provide a valve which has a particularly long life in relation in particular to the wear of its moving members.

These and further objects are attained according to the invention as characterised in the claims.

The invention is based on the fact that in order to close said communication port on command for the purpose of shutting off the flow, or to leave the flow passage through the port free, the valve comprises:
- a chamber, positioned above the communication port, for fluid passage from one conduit to the other via the communication port,
- a free flexible membrane which separates the upper region of said chamber from the underlying region, is of such an area as to cover the communication port, and is arranged to assume a first position in which it lies in contact with the entire edge of the port and a second position in which it is raised from the edge of the port,
- pilot means which, on command, feed into the upper region of the chamber a pilot fluid having a pressure such as to urge the membrane into the first position and to press against it with a thrust sufficient to prevent fluid passage through the port, against the thrust of the fluid present in the conduits.

The minimum valve of the pilot fluid pressure can be slightly greater than the mean value of the pressures in the two conduits ("*ways*") communicating with the outside.

In practice, if said communication port is directly connected to that conduit connected to discharge, the minimum value of the pilot fluid pressure is substantially equal to the pressure present in the other conduit.

Obviously, the greater the pilot pressure the higher the degree of reliability with which the membrane closes the communication port.

The invention eliminates the mutually sliding movable parts, consisting of the valving element and the surfaces against which it moves. Hence all those technical problems related to this movement, including wear in particular, are drastically reduced.

Moreover all seal members along the constituent parts of the valving element are eliminated. In this respect, in this invention the seal between the environment within which the handled fluid flows and the outside is provided, in the region involving the valving element, by the actual membrane which itself acts as the valving element.

In addition, valve manufacture is considerably simplified, in particular because it is no longer necessary to construct solid parts engaging together as an exact fit, because the valving element is merely in the form of a membrane fixed to the valve body.

Furthermore, because of the fact that it is no longer necessary to construct solid parts engaging together as an exact fit, there are no particular technical problems relating to component expansion. The valve can hence operate at high or low temperature without restriction.

The invention is described in detail hereinafter with the aid of the accompanying figures, which illustrate a non-exclusive embodiment thereof.
Figure 1 is a partly sectional side view of the valve, in the "open" configuration.
Figure 2 is an enlarged detail of Figure 1, in the "closed" configuration.
Figure 3 is a view of Figure 2 from above, in which the pilot means are detached and some parts removed.
Figure 4 is a view similar to Figure 3, showing a second embodiment of the invention.

The illustrated valve comprises a body 10 in which two conduits 11 and 12 communicating with the outside are provided for entry and exit of the fluid respectively, and/or vice versa. Substantially, either can be used as entry or exit without distinction.

The pressure of the fluid on entering is greater than that of the fluid on leaving.

The two conduits 11 and 12 are connected together via at least one communication port having a flat upper edge.

Specifically, in the embodiment illustrated in the figures, the body 10 comprises two side-by-side ports 21 and 22, each connected directly to a relative conduit 11 and 12 respectively, and each having a respective axis spaced from the axis of the other port, said ports having their upper edges 21a and 22a lying in the same plane P.

In a different embodiment, not shown in the figures, the two membrane ports for the conduits 11 and 12 are positioned one within the other in a more or less coaxial manner.

Above the communication ports 21 and 22 there is provided a chamber 25 for fluid passage from one conduit 11, 12 to the other, via the communication ports 21, 22.

In the embodiment shown in the figures, the chamber 25 is provided within the cover 30, which is fixed to the top of the body 10. In particular, the chamber 25 has a substantially circular plan shape.

The chamber 25 lies above the ports 21 and 22 and creates a connection for fluid passage from one port to the other.

On the plane surface P there is positioned a relatively thin membrane 36 having a high degree of flexibility, which overlies and covers the ports 21 and 22 in plan view.

It is also free of components or elements, ie there is substantially nothing joined to it, in particular within the region overlying the ports 21 and 22.

Said membrane 36 is securely clamped along its periphery between the cover 30 and the upper surface of the body 10, and separates at least the upper region of the chamber 25 from the underlying region.

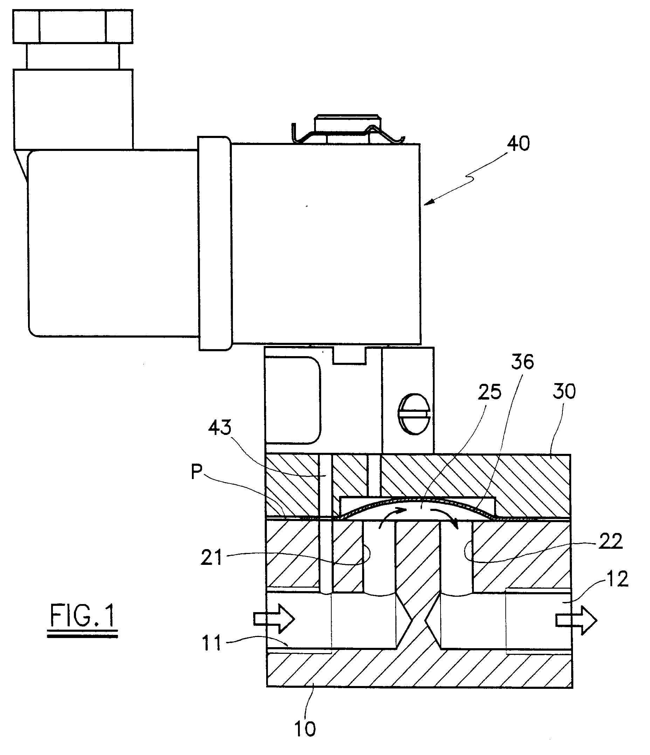

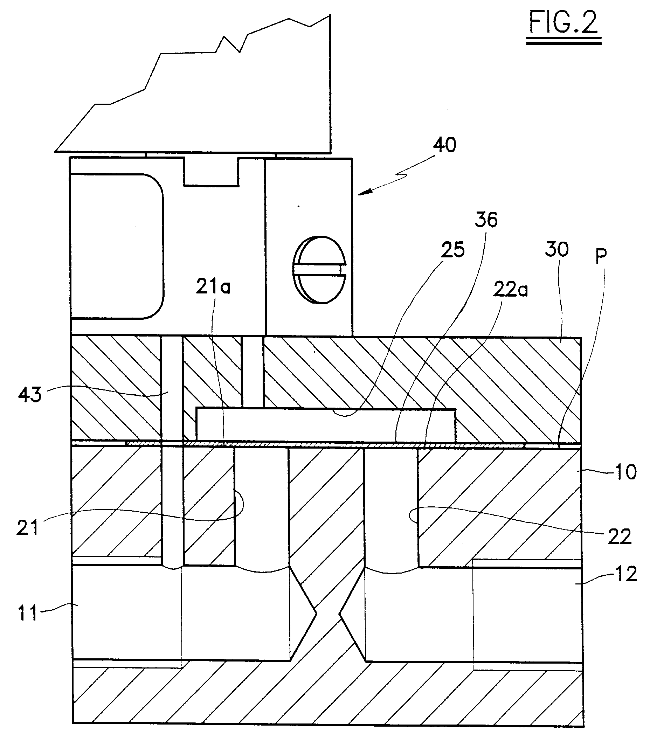

The membrane 36 has an area such as to cover the communication ports 21 and 22 and is arranged to assume a first position (shown in Figure 2) in which it lies in contact with the entire upper edge 21a, 22a of both the ports 21, 22, and a second position (shown in Figure 1) in which it is raised from said edges.

In the embodiment shown in the figures, the membrane 36 when in its flat configuration is substantially coplanar with the upper edges 21a, 22a of the ports 21, 22, and separates the entire chamber 25 from the underlying region.

To the valve there are applied pilot means 40 of known type which on command feed into the upper region of the chamber 25, above the membrane 36, a pilot fluid having a pressure such as to urge the membrane 36 into the first position and to press against it with a thrust sufficient to prevent fluid passage through the ports 21 and 22 against the thrust of the fluid present in the conduits 11 and 12.

In the embodiment shown in the figures, said pilot means 40 comprise a usual shut-off valve, the valving element of which is operated by electromagnetic means.

In operation, to set the valve in the "closed" configuration, the means 40 operate to feed pressurized pilot fluid into the chamber 25 above the membrane 36, the fluid having a pressure such as to urge the membrane 36 against the ports 21 and 22 with a force such as to overcome the opposite force provided by the fluid acting within the chamber 25 below the membrane 36. In this manner, passage through the ports 21 and 22 is prevented (see Figure 2).

The membrane 36 must be flexible to such an extent as to be able to deform to assume the two said positions, in which fluid passage is permitted and prevented respectively. In practice the membrane used can be of synthetic resin having a thickness of a few tenths of a millimetre with reinforcement fibres, and preferably of which at least a part has elastomeric characteristics.

Theoretically, to close the valve it would be sufficient for the pressure above the membrane 36 to be just higher than the pressure below it, this being substantially equal to the mean of the pressures in the two conduits 11 and 12.

In practice, because the membrane 36 necessarily has a certain rigidity, the pilot pressure must be at least slightly greater than said mean value.

Advantageously, the pilot fluid used by the pilot means 40 can be the actual fluid entering the valve of the invention. For this purpose, through the body 10 and cover 30 there is provided a narrow conduit 43 which connects the entry conduit 11 to the means 40, said fluid being fed into the chamber 25 above the membrane 36, to close the valve.

In this case the pilot pressure is hence substantially equal to the pressure in the entry conduit. The thrust acting within the upper region of the chamber 25 is sufficient to overcome the thrust acting below the membrane 36, given that the fluid pressure below the membrane 36 is influenced by the lesser pressure present in the discharge conduit 12. The membrane 36 is hence urged downwards against the edges 21a and 22a, to close the relative ports 21 and 22. The closure action thereat is very effective on the port 22 communicating with the discharge, given that the pressure below the membrane 36 in this port is less than the pressure above the membrane.

In the region of the other port 21, the closure action is instead substantially ineffective, given that the pressures above and below the membrane are substantially equal.

Obviously, the greater the pilot pressure the higher the degree of reliability with which the membrane 36 closes the communication ports.

To set the valve in the "open" configuration, no pressurized pilot fluid is fed into the chamber 25, ie the chamber 25 is connected to discharge via the means 40 or is connected to the exit conduit. The fluid present in the entry conduit (for example the conduit 11) has a pressure greater than the pressure in the upper region of the chamber 25, and hence the thrust acting from the bottom upwards on the membrane 36 is greater than that acting from the top downwards. The membrane 36 is therefore moved upwards towards the top of the chamber 25, away from the ports 21 and 22, the fluid hence being free to pass from one port 21 to the other 22, by flowing below the membrane 36, along the lower region of the chamber 25.

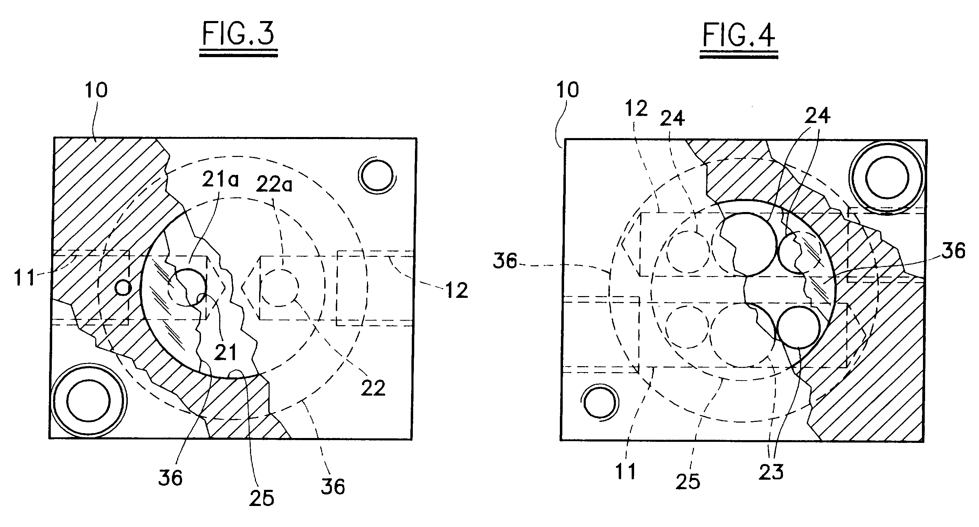

In the embodiment shown in Figure 4, to facilitate fluid passage from one port to the other and reduce pressure drop, each communication port 21, 22 is divided into a number of smaller ports 23 and 24 respectively, the edges of which all lie in one and the same plane. In this case, the membrane 36 has an area such as to cover all the smaller ports 23 and 24, and assumes a first position in which it is in contact with the entire perimeter of all these ports.

Numerous modifications of a practical and applicational nature can be made to the invention, but without leaving the scope of the inventive idea as claimed hereinafter.

## Claims

1. A pilot-operated valve for fluid shut-off comprising, for fluid entry/exit, at least two conduits communicating with the outside and connected together via at least one communication port having a flat edge, the entry fluid pressure being greater than the exit fluid pressure, characterised in that to close said communication port on command for flow shut-off, or to leave the flow passage through the port free, the valve comprises:
- a chamber, positioned above the communication port, for fluid passage from one conduit to the other via the communication port,
- a free flexible membrane which separates the upper region of said chamber from the underlying region, is of such an area as to cover the communication port, and is arranged to assume a first position in which it lies in contact with the entire edge of the port and a second position in which it is raised from the edge of the port,
- pilot means which, on command, feed into the upper region of the chamber a pilot fluid having a pressure such as to urge the membrane into the first position and to press against it with a thrust sufficient to prevent fluid passage through the port, against the thrust of the fluid present in the conduits.

2. A valve as claimed in claim 1, characterised in that the minimum value of the pilot fluid pressure is at least slightly greater than the mean value of the pressures in said conduits which communicate with the outside.

3. A valve as claimed in claim 1, characterised in that the the pilot fluid pressure is substantially equal to the pressure in the entry conduit.

4. A valve as claimed in claim 1, characterised by comprising two side-by side ports, each connected directly to a relative conduit, and each having a respective axis spaced from the axis of the other port, said ports having their upper edges lying in the same plane and communicating with the same passage chamber, the membrane having an area such as to cover both communication ports and arranged to assume a first position in which it is in contact with the entire perimeter of both ports.

5. A valve as claimed in claim 1, characterised in that when in its flat configuration, the membrane is coplanar with the upper edges of the ports.

6. A valve as claimed in claim 1, characterised in that the communication port is divided into a number of smaller ports, the edges of which all lie in the same plane, the membrane having an area such as to cover all the smaller communication ports and arranged to assume a first position in which it is in contact with the entire perimeter of all these ports.
